# EUROPEAN PATENT SPECIFICATION

(11) **EP 0 887 010 B1**
(45) Date of publication and mention of the grant of the patent: **03.04.2002**
(21) Application number: 98201912.7
(22) Date of filing: 09.06.1998
(51) Int. Cl.: A01D 78/10

(54) **An implement for adjusting an agricultural machine, such as a hay-making machine**
Vorrichtung zur Verstellung einer landwirtschaftlichen Maschine wie einer Heuwerbungsmaschine
Dispositif de réglage d'une machine agricole telle qu'une machine de fenaison

(30) Priority: 25.06.1997 NL 1006397
(43) Date of publication of application: 30.12.1998
(73) Proprietor: MAASLAND N.V., 3155 PD Maasland (NL)
(72) Inventor: van den Engel, Alfonsus Jacobus, 3123 CM Schiedam (NL)
(74) Representative: Corten, Maurice Jean F.M.

(56) References cited:
- EP-A- 0 337 559
- EP-A- 0 385 899
- DE-A- 1 932 785
- DE-C- 4 314 250
- DE-U- 9 213 458
- NL-A- 7 607 093

## Description

The invention relates to an agricultural machine, in particular a tedder, according to the preamble of claim 1. Such an agricultural machine is known from GB-A-1,578,562.

Due to the sideward adjusting possibility, an optimal operative position and an optimal transport position relative to the tractor can be chosen independently of each other.

The present invention provides an alternative agricultural machine with the characterizing features of claim 1. In this manner, whilst maintaining the pivotability relative to the tractor, the dynamic behaviour of the agricultural machine is improved, also at relatively high speeds. This principle is expressed optimally with a so-called asymmetric agricultural machine, i.e. a machine with which in the first position (the transport position or the position in which two adjacent crop working members are arranged at least substantially symmetrically relative to the central longitudinal line of the tractor), on one side of the central longitudinal line of the tractor coupled to the machine there are more crop working members than on the other side.

The invention will be explained more in detail with reference to the following figures showing a number of only illustrative and at present most advantageous embodiments.
Figure 1 is a partial plan view of a hay-making machine coupled to a tractor according to the invention, in a first position;
Figure 2 is a view corresponding with Figure 1, showing the hay-making machine in a second position;
Figure 3 is the integral plan view of the hay-making machine shown in Figures 1 and 2;
Figure 4 is a partial rear view of the hay-making machine shown in Figure 3, and
Figure 5 is a rear view of a variant of the hay-making machine shown in Figure 1.

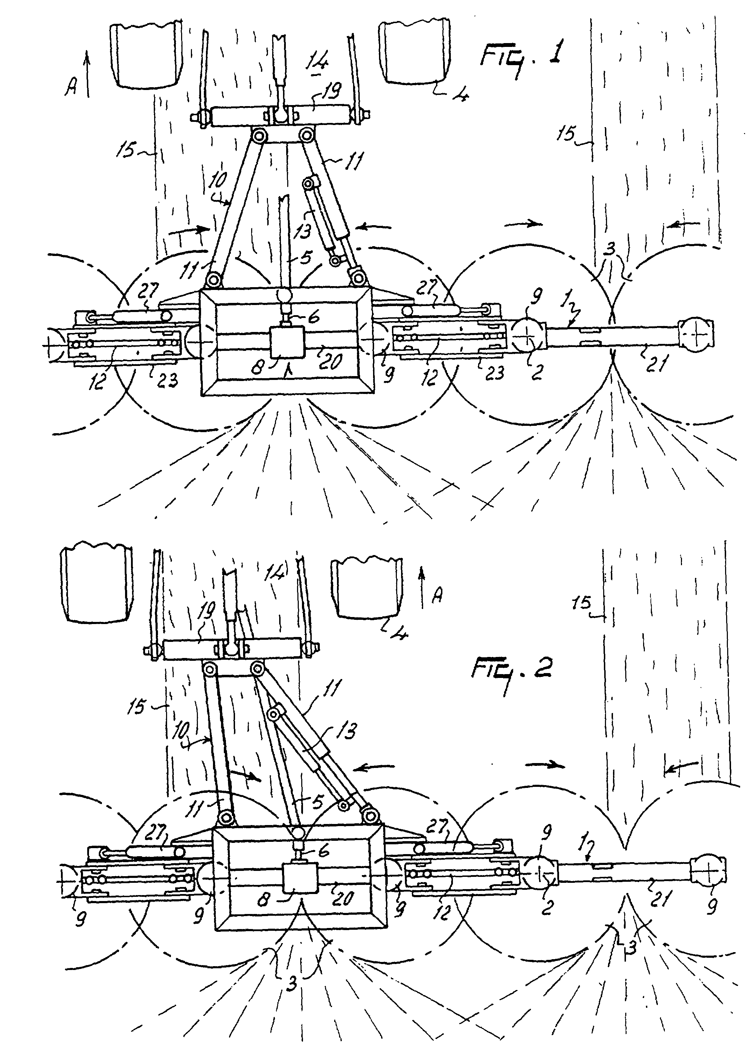

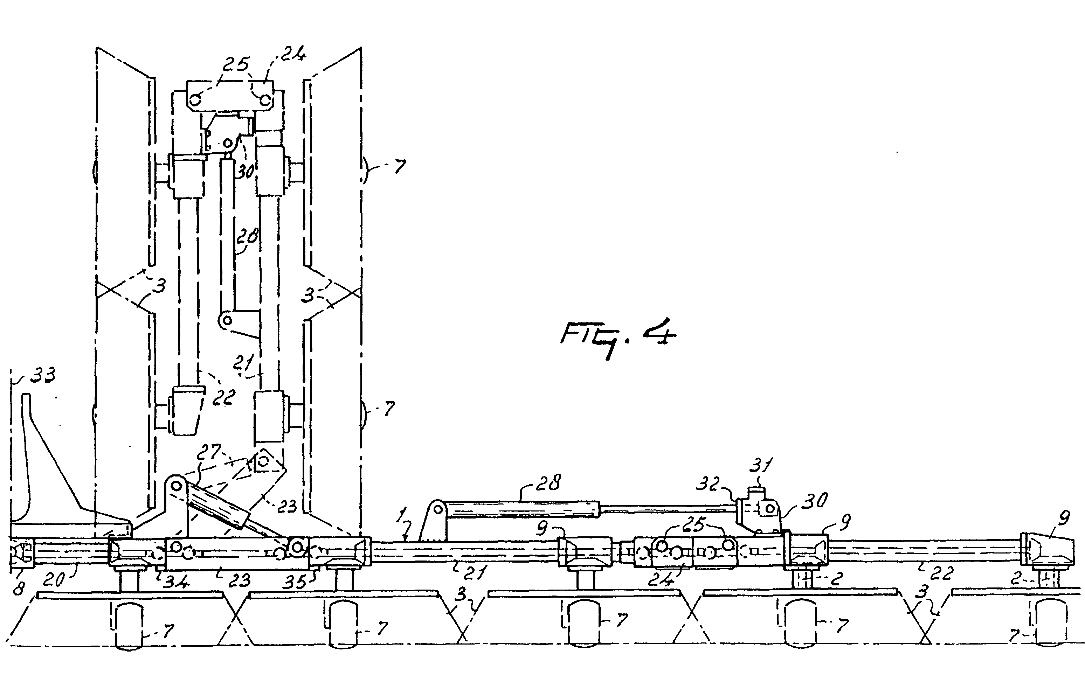

In an embodiment shown in the figures as a rotary tedder, the agricultural machine has a straight, jointed frame beam 1 in which, at least in the embodiment of Figures 1 to 4, ten rake members 3, arranged in side by side relationship and each rotatable about upwardly extending axes of rotation 2, are bearing-supported (see Figure 4).

The rake members 3 are driven, in a manner known per se, from a power take-off shaft of a tractor 4 propelling the agricultural machine by means of an intermediate shaft 5 which, via an ingoing shaft 6 of the machine, is connected to a gear box 8 by means of which drive shafts 12 are driven, which drive shafts 12, via respective gear boxes 9, drive the rake members 3 in their rotating movement. Of course, another drive for the rake members, e.g. a hydraulic or electric drive or a rope drive, may be chosen as well. As indicated by the arrows in the figures, the rake members 3 are driven in pairs in opposite directions of rotation.

The agricultural machine according to this embodiment is supported by running wheels 7 (Figure 4) one of which being each time located below each rake member 3. During operation of the agricultural machine, these running wheels, viewed from above, maintain a preferably fixed position relative to the frame 1. In this embodiment, the axes about which the running wheels 7 rotate are orientated substantially parallel to the frame 1 and the frame beam 1 extends at least substantially perpendicular to the direction of travel A. If the agricultural machine is e.g. constituted by a side delivery rake, the frame beam 1 will assume, in its operative position, an oblique position relative to the direction of travel A, while the axes about which the running wheels 7 rotate, remain at least substantially orientated perpendicular to the direction of travel A. As side delivery rakes, the rake members 3 will all rotate in the same direction. There may also be sub-ranges of adjacent rake members 3 rotating all in the same direction, while the directions of rotation for two adjacent ranges are opposite, such as for e.g. a centre delivery rake.

The agricultural machine is fastened to the lifting hitch of the tractor 4 by means of a coupling device 10. Said device 10 comprises two arms 11 which are arranged in such a manner that they converge in forward direction and whose rear ends, at some distance from each other, are fastened to the frame beam 1 so as to be sidewards pivotable. The front ends of the arms 11 are also fastened so as to be sidewards pivotable near the upper side of a three-point trestle 19. Said trestle is capable of being coupled to the two lower lifting arms and to the upper lifting arm of the lifting hitch 14 of the tractor 4. However, the front ends of the arms 11 may also be fastened sidewards pivotably to an at least substantially horiontal beam which, during operation, is only coupled to the rear ends of the lower lifting arms of the lifting hitch 14. In this manner, by means of the coupling device 10, the frame 1 is pivotable relative to the tractor 4 about an upwardly extending axis whose location is defined before the three-point trestle 19 relative to the direction of travel A. This location of the upwardly extending pivotal axis for the frame 1 has appeared to be advantageous for the dynamic behaviour of the agricultural machine. According to a possible variant, the arms 11 of the coupling device 10 extend further in forward direction beyond the three-point trestle 19, so that the front ends of these arms 11 intersect with each other in one point, while in the intersection an upwardly extending pivotal axis for the frame beam 1 is disposed. Consequently, this pivotal axis is a material axis which is bearing-supported in an arm extending forwardly from the three-point trestle 19.

In accordance with the invention, the right arm 11 shown in Figure 1 is designed as an extendable one. For this purpose said arm consists of two telescoping parts which can be adjusted by means of an adjusting element 13, preferably a hydraulic piston/cylinder combination. By designing this adjustable arm 11 as a longer one than the arm 11 located on the other side of the central longitudinal axis of the tractor 4, the frame beam 1 will move sidewards, the orientation of the frame beam 1 relative to the direction of travel of the agricultural machine remaining at least substantially entirely unchanged, as is shown by comparing Figures 1 and 2 mutually. Of course, alternative embodiments forming part of the invention are possible for ensuring a sideward movement of the frame beam 1. For example, an embodiment in which the frame beam 1, via a (non-shown) intermediate frame, is fitted to the coupling device 10, while the frame beam 1 is sidewards movable relative to said intermediate frame and for this purpose is e.g. sidewards slidably fitted to this intermediate frame. It is important that, by the sideward movement bringing the frame beam 1 or any other element bearing the working members 3 into two different, preferably at least substantially parallel positions, the agricultural machine can assume a position that is most suitable for operating and for transport purposes. This is further explained with reference to Figures 1 and 2. In Figure 1 the frame beam 1 is located straight behind the tractor 4, so that the two inner rake members 3 are substantially at equal distance from the central longitudinal line of the tractor 4 (symmetric position for these two rake members). This position of the frame beam 1 relative to the tractor 4 is most favourable for transport, e.g. by road. However, this position of the frame beam 1 is less suitable for carrying out agricultural operations whilst being impeded as little as possible by the tractor 4. For, in the embodiment of Figure 1, during spreading the swath or windrow 15, the left hand rear wheel of the tractor 4 shown in the drawing moves over one of the swaths or windrows 15 lying parallel to and next to each other at a usual spit. In this situation, the sideward adjustability of the agricultural machine is of assistance (see Figure 2). Without adjusting the spit between the swaths 15 or the distance between the crop working members 3 or other agricultural working members being provided on the frame 1, the frame 1 can now be adjusted sidewards in such a manner that the tractor 4 impedes the agricultural operations to be carried out by means of the agricultural machine at least as little as possible. The invention will in particular be advantageous when by means of the agricultural machine an even number of rows extending at least substantially at the same spit and at least substantially parallel to each other have to be worked or handled at least substantially in one run by the agricultural machine, or when in particular between such rows a working or handling has to be carried out by the agricultural machine. The invention may also be appropriate to position such rows in such a manner that a next agricultural machine will meet with the advantages of the invention. For example, it is possible that a mowing machine is coupled to the tractor 4 so as to be sidewards adjustable and is adjusted sidewards relative to the tractor 4 in such a manner that the swaths created by the mowing machine are in a favourable position for being worked subsequently by e.g. a tedder which is not sidewards adjustable relative to the respective tractor but nevertheless, by the preceding sideward adjustment of the mowing machine, the tractor belonging to the tedder will not harm the effect of the tedder within the scope of the invention. Furthermore, the agricultural machine may also be constituted by e.g. a field crop sprayer or a fertilizer spreader or a harrow, such as a weeder harrow.

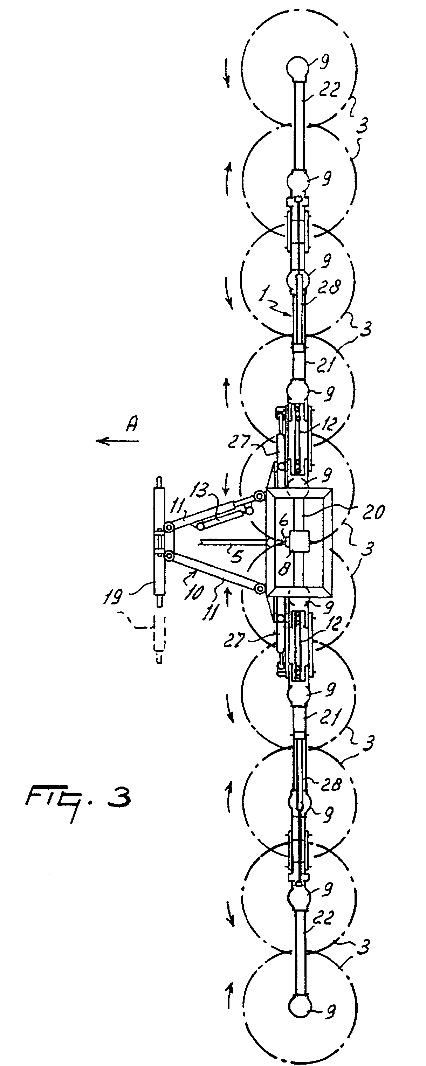

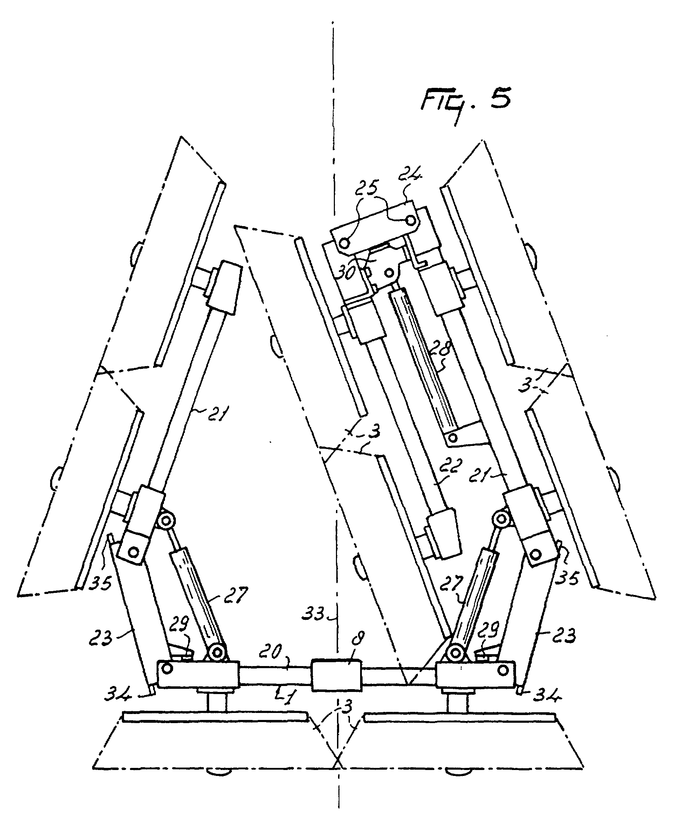

Figure 3 shows the complete plan view of the embodiment of Figures 1 and 2, and Figure 4 shows partially the rear view thereof in which the folded-up position is represented imaginarily. In the folded-up position parts of the frame beam 1 including the agricultural working members 3 provided thereon are folded-up in a suitable manner into a transport position by pivoting about substantially horizontal pivotal axes extending substantially parallel to the direction of travel. In this embodiment the agricultural machine is designed symetrically, so that on both sides of the middle of the frame beam 1 there are each time five rake members 3. For easy reference, Figure 4 only represents one symmetric half in which is shown how the frame beam 1 is composed of a fixed frame beam 20 and two pivotable frame beams 21, 22 respectively. Between two frame beams 20, 21 and 21, 22 respectively, there is located an intermediate arm 23, 24 respectively which is at least free from working members. In the vicinity of its respective end, each intermediate arm has a pivotable connection about a pivotal axis 25 which, in the operative position of the agricultural machine, is substantially horizontal and extends substantially parallel to the direction of travel. Because in the present embodiment the (schematically shown) drive shafts extend through the frame beams and intermediate arms, at each pivotal axis there is disposed a cardan joint so that, irrespective of the folded-up position of the frame beam 1, the drive for all the agricultural working members 3 is assured. Each frame beam 20, 21, 22 bears two agricultural working members 3. Of course, this number may optionally be different. By means of an adjusting element 27, preferably a hydraulic piston/cylinder combination, the upward pivotal movement of the intermediate arm 23 relative to the fixed frame beam 20, and the upward pivotal movement of the frame beam 21 relative to the intermediate arm 23 are controlled. By means of the adjusting element 28, preferably a hydraulic piston/cylinder combination, the upward pivotal movement of the intermediate arm 24 relative to the frame beam 21 and the upward pivotal movement of the frame beam 22 relative to the intermediate arm 24 are controlled. By means of a stop 29 (see Figure 5), which is active between the fixed frame beam 20 and the intermediate arm 23, the angle through which the intermediate arm 23 can be pivoted upwards is limited to an angle smaller than 90°.

The adjusting element 27 is fitted with one end to the fixed frame beam 20 and with its other end to the frame beam 21. The adjusting element 28 is fitted with one end to the frame beam 21 and with its other end to the frame beam 22. The mounting of the adjusting elements 27, 28 respectively is each time located relatively near to the pivotal axes of the frame beams 21, 22 respectively. Near its pivotal axis the frame beam 22 bears a stop element 30 including two stops 31, 32 which enclose mutually an angle of substantially 90°. In the folded-out position of the frame beam 1 shown in Figure 4, the stop 31 is faced away from the frame beam 1 and the stop 32 faces the middle of the frame beam 1. In the entirely folded-up position the stop 32 bears against the intermediate arm 24 while the stop 31 bears against the frame beam 21. Relative to the adjusting element 28 the stop portion 30 thus rotates through an angle of approximately 180° about an axis extending at least substantially parallel to the pivotal axes.

Figure 5 shows an asymmetric embodiment for the frame beam 1 in the folded-up position. In the drawing on the left hand of the central longitudinal axis 33 of the (non-shown) tractor, there are three agricultural working members, and on the right thereof there are five agricultural working members. In Figure 5 also the stops 34 and 35 are clearly visible at the ends of the intermediate arm 23, which stops, in the folded-out position of the frame beam 1, engage the ends of the fixed frame beam 20 and the frame beam 21 respectively, in order to keep, in the folded-out position of the frame beam 1, said three elements 20, 21 and 23 in the desired folded-out position, preferably at least substantially in line with each other. Relative to the embodiment shown in Figure 4, the intermediate arms 23 in the embodiment shown in Figure 5 assume a position approaching 90° relative to the horizontal. Also a number of working members 3 deviating from the embodiment of Figure 5 and resulting in an asymmetric embodiment, is possible. The above described coupling to the tractor, using an upwardly extending pivotal axis which, relative to the direction of travel, is located before the coupling point 19 to the tractor 4 (see e.g. also claim 19), is optimally expressed in an asymmetric embodiment of the agricultural machine.

Although it appears from Figures 1 and 2 that the agricultural machine, in rear view, moves to the right from the transport position (Figure 1), an adjustment to the left is possible as well.

## Claims

1. An agricultural machine, in particular a tedder, having a frame, said frame being provided with a coupling device (10) for coupling to a propelling implement (4), two or more working members (3) being supported by said frame, said working members (3) in the operative position of the machine being disposed in side-by-side relationship transverse to the usual direction of travel of the machine, said machine being provided with adjusting means for moving the frame sidewards between a first and a second position relative to the direction of travel, the orientation of the frame relative to the direction of travel (A) remaining unchanged, **characterized in that** the coupling device, relative to the usual direction of travel, comprises two mutually converging forwardly orientated arms (11) whose rear ends are located at some distance from each other and are fastened about upwardly extending rear pivotal axes to the frame of the agricultural machine, so that the coupling device (10), during operation of the agricultural machine, allows pivoting about an upwardly extending axis relative to the propelling implement (4), said upwardly extending axis, relative to the direction of travel, being located in front of the coupling point (19) to the propelling implement (4).

2. An agricultural machine as claimed in claim 1, **characterized in that**, viewed from above, the axis is located between the lower lifting arms (14) of the lifting hitch of the tractor.

3. An agricultural machine as claimed in claim 1 or 2 **characterized in that**, viewed from above, the position of the axis relative to a three-point trestle or coupling trestle (19) is defined by the intersection of connection lines (11) through the centre lines of pivotal axes of a coupling device of the machine, said coupling device being transformable during operation.

4. An agricultural machine as claimed in claim 1 or 2, **characterized in that** the front ends of the arms (11) are also located at some distance from each other and are fastened pivotably about upwardly extending front pivotal axes to the three-point trestle or coupling trestle (19) during operation.

5. An agricultural machine as claimed in any one of the preceding claims 1 to 4, **characterized in that**, viewed from above, a connection line through the front pivotal axes, in a normal operative position, is located approximately parallel to a connection line through the rear pivotal axes.

6. An agricultural machine as claimed in any one of the preceding claims 1 to 5, **characterized in that** the arms constitute part of a lockable self steering device.

7. An agricultural machine as claimed in any one of the preceding claims 1 to 6, which, during operation, is supported on the ground by means of supporting members (7), **characterized in that**, viewed from above, the supporting members assume a fixed position relative to the frame of the machine.

8. An agricultural machine as claimed in any one of the preceding claims 1 to 7, **characterized in that** there are provided shortening means, preferably hydraulic adjusting means, to shorten a connection line (11) of the coupling device.

9. An agricultural machine as claimed in any one of the preceding claims 1 to 8, **characterized in that** there are provided hinging means (25) for pivoting at least one working member about an axis.

## Patentansprüche

1. Landwirtschaftliche Maschine, insbesondere Zettwender, mit einem Rahmen, wobei der Rahmen mit einer Anschlußvorrichtung (10) zum Anschluß an eine Antriebsvorrichtung (4) versehen ist, wobei zwei oder mehr Bearbeitungsglieder (3) durch den Rahmen abgestützt sind, wobei die Bearbeitungsglieder (3) in der Arbeitslage der Maschine nebeneinander quer zur Arbeitsrichtung der Maschine angeordnet sind, wobei die Maschine mit einer Stellvorrichtung zum Bewegen des Rahmens in seitlicher Richtung zwischen einer ersten und einer zweiten Position relativ zur Arbeitsrichtung versehen ist, wobei die Ausrichtung des Rahmens relativ zu der Arbeitsrichtung (A) unverändert bleibt,
**dadurch gekennzeichnet, daß** die Anschlußvorrichtung zwei in bezug auf die Arbeitsrichtung konvergierende, vorwärts gerichtete Arme (11) umfaßt, deren hintere Enden in einigem Abstand voneinander angeordnet und um aufwärts gerichtete hintere Schwenkachsen schwenkbar mit dem Rahmen der landwirtschaftlichen Maschine verbunden sind, so daß die Anschlußvorrichtung (10) im Betrieb der landwirtschaftlichen Maschine ein Schwenken relativ zu der Antriebsvorrichtung (4) um eine aufwärts gerichtete Achse ermöglicht, wobei die aufwärts gerichtete Achse in bezug auf die Arbeitsrichtung vor dem Anschluß (19) an die Antriebsvorrichtung (4) angeordnet ist.

2. Landwirtschaftliche Maschine nach Anspruch 1, **dadurch gekennzeichnet, daß** die Achse in der Draufsicht zwischen den Unterlenkern (14) der Hebevorrichtung des Schleppers angeordnet ist.

3. Landwirtschaftliche Maschine nach Anspruch 1 oder 2, **dadurch gekennzeichnet, daß** in der Draufsicht die Position der Achse relativ zu einem Dreipunkt-Anbaubock oder Anbaubock (19) durch den Schnittpunkt von Verbindungslinien (11) durch die Mittellinien von Schwenkachsen einer Anschlußvorrichtung der Maschine definiert ist, wobei die Anschlußvorrichtung im Betrieb verformbar ist.

4. Landwirtschaftliche Maschine nach Anspruch 1 oder 2, **dadurch gekennzeichnet, daß** die vorderen Enden der Arme (11) ebenfalls in einigem Abstand voneinander angeordnet und im Betrieb um aufwärts gerichtete vordere Schwenkachsen schwenkbar mit dem Dreipunkt-Anbaubock oder Anbaubock (19) verbunden sind.

5. Landwirtschaftliche Maschine nach einem der vorhergehenden Ansprüche 1 bis 4,
**dadurch gekennzeichnet, daß** in Draufsicht eine Verbindungslinie durch die vorderen Schwenkachsen in einer normalen Arbeitslage etwa parallel zu einer Verbindungslinie durch die hinteren Schwenkachsen verläuft.

6. Landwirtschaftliche Maschine nach einem der vorhergehenden Ansprüche 1 bis 5,
**dadurch gekennzeichnet, daß** die Arme Teil einer verriegelbaren Selbststeuervorrichtung sind.

7. Landwirtschaftliche Maschine nach einem der vorhergehenden Ansprüche 1 bis 6, die im Betrieb durch Stützglieder (7) auf dem Boden abgestützt ist,
**dadurch gekennzeichnet, daß** die Stützglieder in der Draufsicht eine feste Position relativ zu dem Rahmen der Maschine einnehmen.

8. Landwirtschaftliche Maschine nach einem der vorhergehenden Ansprüche 1 bis 7,
**dadurch gekennzeichnet, daß** Verkürzungsvorrichtungen, vorzugsweise hydraulische Stellvorrichtungen, vorgesehen sind, um eine Verbindungslinie (11) der Anschlußvorrichtung zu verkürzen.

9. Landwirtschaftliche Maschine nach einem der vorhergehenden Ansprüche 1 bis 8,
**dadurch gekennzeichnet, daß** eine Schwenkvorrichtung (25) zum Schwenken mindestens eines Bearbeitungsgliedes um eine Achse vorgesehen ist.

## Revendications

1. Machine agricole, en particulier une faneuse, ayant un châssis, ledit châssis étant pourvu d'un dispositif d'accouplement (10) destiné à l'accouplement à un instrument de propulsion (4), deux ou plusieurs éléments de travail (3) étant supportés par ledit châssis, lesdits éléments de travail (3), lorsque la machine fonctionne, étant disposés côte à côte, de manière transversale à la direction habituelle de déplacement de la machine, ladite machine étant pourvue de moyens d'ajustement pour déplacer le châssis de manière latérale entre une première et une seconde position par rapport à la direction de déplacement, l'orientation du châssis par rapport à la direction de déplacement (A) restant inchangée, **caractérisée en ce que** le dispositif d'accouplement, par rapport à la direction habituelle de déplacement, comprend deux bras (11) orientés vers l'avant convergeant de manière mutuelle dont les extrémités arrière sont situées à une certaine distance les unes des autres et sont fixées autour d'axes pivotants arrière s'étendant vers le haut sur le châssis de la machine agricole, de telle sorte que le dispositif d'accouplement (10), lorsque la machine agricole fonctionne, permette la rotation autour d'un axe s'étendant vers le haut par rapport à l'instrument de propulsion (4), ledit axe s'étendant vers le haut, par rapport à la direction de déplacement, étant situé devant le point d'accouplement (19) sur l'instrument de propulsion (4).

2. Machine agricole selon la revendication 1, **caractérisée en ce que**, lorsqu'elle est vue de dessus, l'axe est situé entre les bras de levage inférieurs (14) du crochet de levage du tracteur.

3. Machine agricole selon la revendication 1 ou 2, **caractérisée en ce que**, lorsqu'elle est vue de dessus, la position de l'axe par rapport à un chevalet à trois points ou chevalet d'accouplement (19) est définie par l'intersection de lignes de connexion (11) à travers les lignes médianes des axes pivotants d'un dispositif d'accouplement de la machine, ledit dispositif d'accouplement pouvant se transformer en fonctionnement.

4. Machine agricole selon la revendication 1 ou 2, **caractérisée en ce que** les extrémités avant des bras (11) sont également situées à une certaine distance les unes des autres et sont fixées de manière pivotante autour d'axes pivotants avant s'étendant vers le haut sur le chevalet à trois points ou chevalet d'accouplement (19) en fonctionnement.

5. Machine agricole selon l'une quelconque des revendications précédentes 1 à 4, **caractérisée en ce que**, lorsqu'elle est vue de dessus, une ligne de connexion à travers les axes pivotants avant, en position de fonctionnement normal, est située de manière approximativement parallèle à une ligne de connexion à travers les axes pivotants arrière.

6. Machine agricole selon l'une quelconque des revendications précédentes 1 à 5, **caractérisée en ce que** les bras font partie d'un dispositif auto-directionnel verrouillable.

7. Machine agricole selon l'une quelconque des revendications précédentes 1 à 6, qui, en fonctionnement, est supportée au niveau du sol par des éléments de support (7), **caractérisée en ce que**, lorsqu'elle est vue de dessus, les éléments de support adoptent une position fixe par rapport au châssis de la machine.

8. Machine agricole selon l'une quelconque des revendications précédentes 1 à 7, **caractérisée en ce que** des moyens de raccourcissement sont prévus, de préférence des moyens d'ajustement hydrauliques, destinés à raccourcir une ligne de connexion (11) du dispositif d'accouplement.

9. Machine agricole selon l'une quelconques des revendications précédentes 1 à 8, **caractérisée** en ce des moyens d'articulation (25) sont prévus pour faire pivoter au moins un élément de travail autour d'un axe.
